Europäisches Patentamt

European Patent Office

Office européen des brevets

(11) Veröffentlichungsnummer: **0 197 479**
**A2**

## (12) EUROPÄISCHE PATENTANMELDUNG

(21) Anmeldenummer: 86104363.6

(22) Anmeldetag: 29.03.86

(51) Int. Cl.⁴: **H04Q 11/04 , H04M 11/06**

(30) Priorität: 30.03.85 DE 3511738

(43) Veröffentlichungstag der Anmeldung:
15.10.86 Patentblatt 86/42

(84) Benannte Vertragsstaaten:
**AT CH DE FR GB IT LI NL**

(71) Anmelder: **International Standard Electric**
**Corporation**
**320 Park Avenue**
**New York New York 10022(US)**
Anmelder: **Standard Elektrik Lorenz**
**Aktiengesellschaft**
**Lorenzstrasse 10**
**D-7000 Stuttgart 40(DE)**

(72) Erfinder: **Israel, Timothy**
**Meisenweg 5**
**D-7141 Möglingen(DE)**
Erfinder: **May, Herbert, Dr.**
**Burgherrenstrasse 95**
**D-7000 Stuttgart 30(DE)**
Erfinder: **Deiters, Georg**
**Friedenaustrasse 13**
**D-7000 Stuttgart(DE)**

(74) Vertreter: **Villinger, Bernhard, Dipl.-Ing. et al**
**Standard Elektrik Lorenz AG Patent- und**
**Lizenzwesen Postfach 300 929 Kurze Strasse**
**8**
**D-7000 Stuttgart 30(DE)**

(54) Schaltungsanordnung zur Anpassung von Teilnehmerendgeräten an eine So-Schnittstelle in ISDN-Fernmeldeanlagen.

(57) Die Anpassungsschaltungsanordnung weist mindestens ein Basisanschlußteil aus einer mit der Teilnehmerleitung verbundenen Anschlußschaltung, einen dieser Schaltung nachgeschalteten Multiplexer/Demultiplexer, eine an den Multiplexer angeschlossene Anpassungsschaltung, an die das Endgerät angeschlossen· ist, und eine mindestens einen Mikrorechner aufweisenden und mit den genannten Schaltungsteilen zusammenarbeitende Steuereinheit auf. Als Basisanschlußteile werden erfindungsgemäß für unterschiedliche Teilnehmerendgeräte Basisanschlußeinheiten (BE) gleichen Aufbaus verwendet, die teilnehmerseitig ein-und dieselbe Schnittstelle aufweisen.

Teilnehmerbereich          Anschlußbereich          Vermittlungsbereich

Fig. 1

0 197 479

P 35 11 738.9

Schaltungsanordnung zur Anpassung von Teilnehmerendgeräten an eine $S_O$-Schnittstelle in ISDN-Fernmeldeanlagen

Die Erfindung betrifft eine Schaltungsanordnung der im Oberbegriff des Patentanspruchs 1 angegebenen Art.

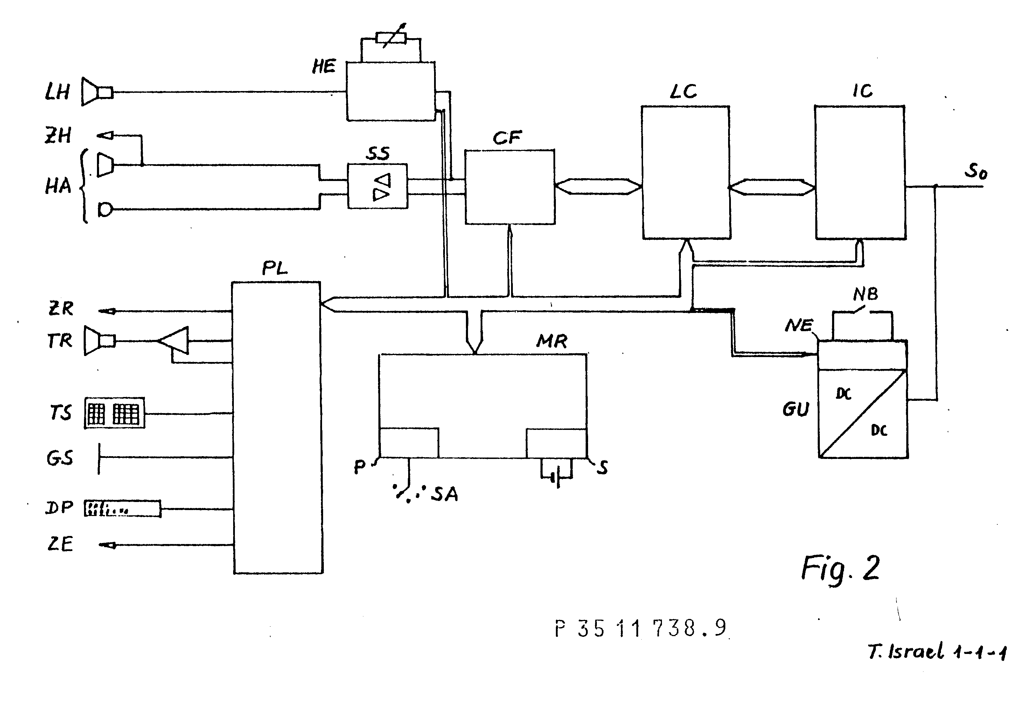

Eine derartige Schaltungsanordnung ist aus der deutschen Offenlegungsschrift 32 25 684 bekannt.. Dort wird eine Abschlußschaltung für eine Teilnehmereinrichtung in einem digitalen Fernmeldesystem vorgeschlagen. Wie Figur 2 zeigt, enthält die Abschlußschaltung eine mit der Teilnehmerleitung verbundene Leitungsabschlußschaltung, sowie eine Multiplexer/Demultiplexer, der über Schalter und ein für alle Endgeräte gleiche Schnittstelle mit Anpassungsschaltungen verbunden ist, an die die Endgeräte angeschlossen sind. Die Anzahl der Endgeräte ist jedoch größer als die Anzahl der zur Verfügung stehenden Bitströme.

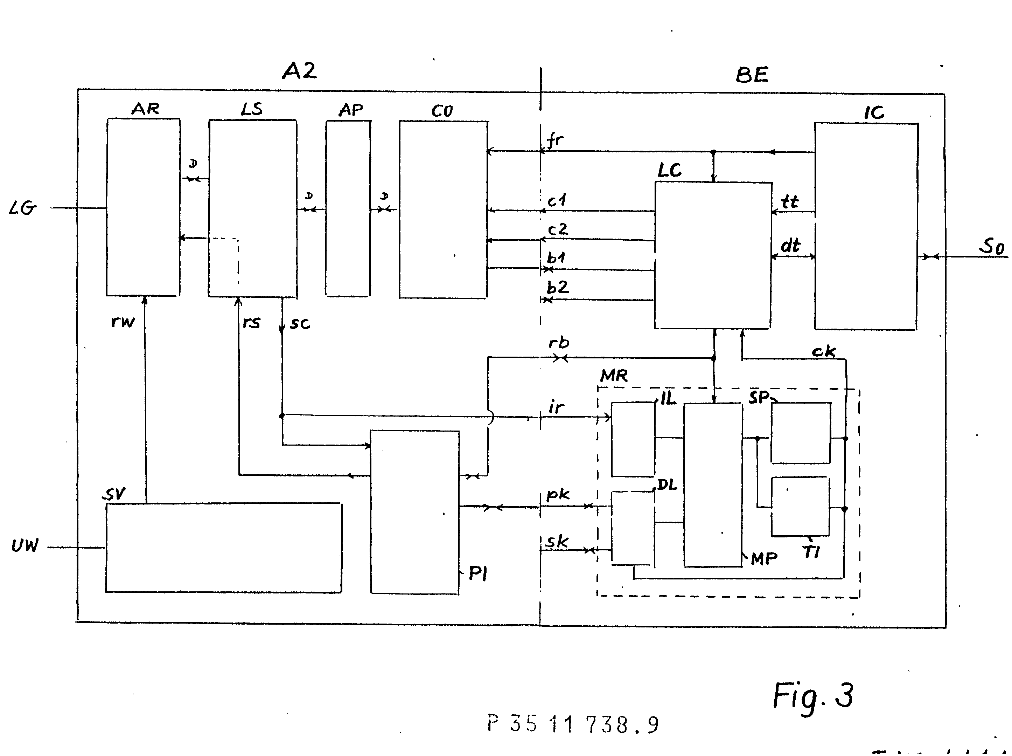

Weiterhin ist aus der europäischen Patentanmeldung 0 096 409 bekannt, innerhalb eines digitalen Fernsprechendgeräts die Schnittstelle für integrierte Dienste (ISDN-Schnittstelle) für eine Übertragung und Vermittlung digitaler Signale von Fernsprech-und Datendiensten in denselben Einrichtungen auf eine analoge Fernsprechschnittstelle umzusetzen. In Fig. 3 ist ein an eine S $_O$-Schnittstelle angeschlossenes Leitungsinterface - (Leitungsanpassungsschaltung) gezeigt, das mit einem Multiplexer/Demultiplexer verbunden ist, an den wiederum als Anpassungsschaltung eine Codier-, Decodier-und Filtereinrichtung und mit dieser in Reihe ein weiteres Interface angeschlossen ist. Diese Einrichtungen arbeiten mit einer Steuereinrichtung zusammen, die einen oder mehrere Mikroprozessoren enthalten kann. An den Ausgang des weiteren Interface, der eine analoge Schnittstelle bildet, können ein analoger Fernsprechapparat und fernsprechtechnische Zusatzeinrichtungen wie beispielsweise Gebührenanzeiger, Freisprecheinrichtungen · oder Anrufbeantworter angeschlossen werden.

An eine ISDN-$S_O$-Schnittstelle können unterschiedliche Endgeräte angeschlossen sein, wie beispielsweise ein digitaler Fernsprechapparat, ein Bildschirmtextmodem, ein Fernkopierer oder ein Teletexgerät. Diese unterschiedlichen Endgeräte haben jeweils ein eigenes spezifisches Basisanschlußteil zum Anschluß und zur Anpassung an das Übertragungsnetz.

Die Aufgabe der Erfindung ist es, eine Schaltungsanordnung der eingangs angegebenen Art zu schaffen, bei der der Basisanschlußteil universell für Teilnehmerendgeräte der verschiedensten Art einsetzbar ist.

Diese Aufgabe wird mit den Merkmalen des Anspruchs 1 gelöst.

Die Erfindung hat den Vorteil, daß mit einer derartigen Basisanschlußeinheit die Vermittlungseinrichtungen nur diese Basisanschlußeinheiten als Kommunikationspartner haben. Ferner ist von Vorteil, daß bei der Neuentwicklung von Anschlußschaltungen der. Endgeräte keine Rücksicht mehr auf das vermittlungsseitige Protokoll genommen werden muß. Bei Änderungen und Ergänzungen der $S_O$-Schnittstelle muß nun auch nicht mehr jeder Basisanschlußteil einzeln entsprechend angepaßt werden. Ferner ist bei der Einführung neuer, noch nicht bekannter Endgeräte keine Entwicklung eines neuen Basisanschlußteils notwendig. Ferner ist von Vorteil, daß das an der Schnittstelle zum Endgerät definierte Protokoll gegenüber dem an der S $_O$-Schnittstelle definierten Protokoll weniger komplex ist.

Die Erfindung wird nun anhand von Ausführungsbeispielen näher erläutert. Es zeigen:

Fig. 1 ein Übersichtsschaltbild eines digitalen Fernsprechnetzes, in dem die Erfindung angewendet wird,

Fig. 2 eine Schaltungsanordnung zur Anpassung eines digitalen Fernsprechapparats an eine $S_O$-Schnittstelle in Übersichtsdarstellung,

Fig. 3 eine näher ausgeführte Schaltungsanordnung der Basisanschlußeinheit und einer Anschlußschaltung für Bildschirmtextmodems, Faksimilegeräte oder Fernkopierer,

Fig. 4 eine näher ausgeführte Schaltungsanordnung der Basisanschlußeinheit und einer Teletexanschlußschaltung und

Fig. 5 die untersten drei Ebenen des OSI-Verfahrensmodells, bezogen auf ein Teilnehmerendgerät.

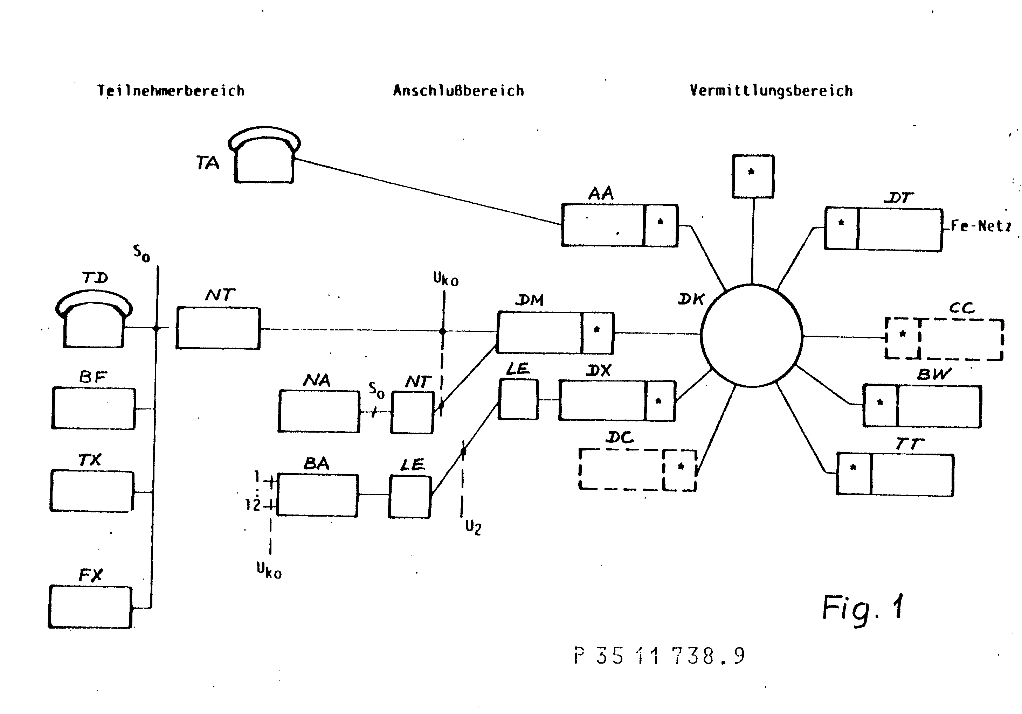

In Fig.1 ist mit DK ein digitales Koppelnetz bezeichnet, an das über mit einem Stern versehene Steuereinheiten verschiedene Einrichtungen angeschlossen sind. Diese Einrichtungen umfassen einen Anschlußteil AA für analoge Fernsprechapparate TA, einen digitalen Mehrdienstemodul DM zum Anschluß von Teilnehmerstationen und Nebenstellenanlagen, einen Mehrdienstemodul DX zum Anschluß von Multiplexern BA, einen Anschlußteil DT zum Anschluß von Fernsprechverbindungsleitungen, einen Zentralzeichenkanalmodul CC, eine Einrichtung BW für Bedienung und Wartung, einen Generator TT für Takte und Töne und einen Datenkommunikationsrechner DC. Im Übertragungsnetz sind drei verschiedene Schnittstellen $U_2$, $U_{kO}$ und

$S_0$ definiert. Am Ausgang des Mehrdienstemoduls DM befindet sich die Schnittstelle $U_{ko}$, die einen Datenstrom mit hoher Übertragungsrate zuläßt und an die Netzendeinrichtungen NT angeschlossen sind. Am Ausgang der Netzendeinrichtungen NT befinden sich die $S_0$-Schnittstellen, die sich durch eine bestimmte Basisanschlußkanalstruktur auszeichnen, und zwar besteht diese Struktur aus einem Datenkanal (D-Kanal) zur Signalisierung mit einer Übertragungsrate von 16 kb/s und zwei Basiskanälen (B-Kanäle) mit einer Übertragungsrate von jeweils 64 kb/s. An eine solche Schnittstelle $S_0$ sind ein digitaler Fernsprechapparat TD, über die Einrichtung BF Bildschirmtextmodems, Faksimilegeräte oder Fernkopierer, über die Einrichtung TX Teletexgeräte und über die Einrichtung FX Faksimilegeräte höherer Übertragungsrate (64 kb/s) anschließbar. Die Erfindung befaßt sich nun mit den an die Schnittstelle $S_0$ anzuschließenden Anpassungsschaltungsanordnungen, im dargestellten Beispiel für die Einrichtungen TD, BF, TX und FX.

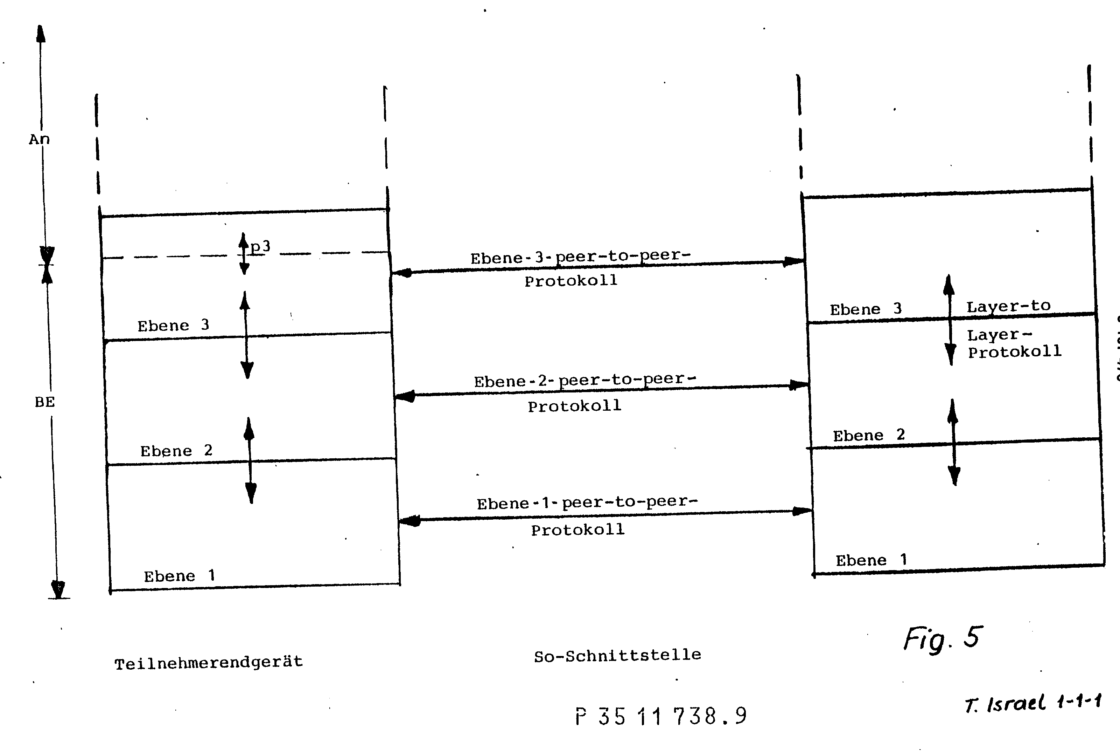

Bei der Datenübertragung ist eine sogenannte Protokollstruktur zu beachten. Ein Protokoll ist ein Satz von Regeln, die sowohl elektrische, mechanische und funktionelle Merkmale einer Datenübertragungsleitung als auch die Steuerverfahren zur Übertragung der Daten über die Anpassungsschaltungsanordnung und in den Bereich von Anwenderprogrammen umfassen. Standardisierungsorganisationen wie der CCITT haben Protokolle in geschichtete Architekturen gebracht. So hat der CCITT ein sogenanntes OSI-Verfahrensmodell (open system interconnection) aus sieben Ebenen aufgestellt, dessen Ebenen jeweils verschiedene Datenübertragungsfunktionen und logische Operationen zugeordnet sind. Jede Ebene ist funktionell unabhängig von den anderen Ebenen, baut jedoch auf den ihr vorangehenden Ebenen auf. Im Rahmen der Erfindung interessieren nur die untersten drei Ebenen, nämlich die Ebene 1 zur Steuerung der physikalischen Verbindung, die Ebene 2 zur Steuerung der Datenverbindung und die Ebene 3 zur Steuerung des Koppelnetzes (s. Fig. 5).

Die Ebene 1 umfaßt physikalische, elektrische und betriebliche Schnittstellenfunktionen, die die physikalische Verbindung (Leitungen oder Kabel) zwischen einem Datenendgerät und einer Datenübertragungseinrichtung bzw. zwischen zwei Datenübertragungseinrichtungen herstellen, aufrechterhalten und trennen. Die Ebene 2 umfaßt die Funktionen für eine zuverlässige Datenübertragung über einen Datenübertragungsabschnitt. Diese Ebene betrifft die Datenleitungssteuerung, die die zwei in der Ebene 1 physikalisch verbundenen Netzknoten steuert. Die Ebene 3 umfaßt die Funktionen für koppelnetzinterne Operationen, beispielsweise die Adressierung und Lenkung über die Funktionen der Ebene 2 mit ihren individuellen Verbindungen hinaus. In der Ebene 3 erfolgt zwar die direkte Steuerung der Koppelpunkte, aber die Datenübertragung zwischen den Koppelpunkten wird nicht beeinflußt.

In Fig. 2 ist nun eine Anpassungsschaltungsanordnung für einen digitalen Fernsprechapparat gezeigt. Diese Schaltungsanordnung besteht aus einer Basisanschlußeinheit, die im wesentlichen die Einrichtungen IC, LC und MR umfaßt, einem Telefonieteil mit den Einrichtungen CF, HE, SS und PL, einem Peripherieteil mit den Einrichtungen LH, ZH, HA, ZR, TR, TS, GS, DP und ZE und einer die Einrichtungen NB, NE und GU umfassenden Notstromeinrichtung. Dabei ist die Basisanschlußeinheit für alle unterschiedlichen Endgeräte gleich ausgebildet.

An die Schnittstelle $S_0$ ist die Einrichtung IC angeschlossen, die eine Anschlußschaltung für die Schnittstelle $S_0$ darstellt. Diese Anschlußschaltung ist über einen Bus mit der Einrichtung LC verbunden, die als Übertragungsebenen-Protokollmodul bezeichnet werden kann. Ausgangsseitig ist dieser Modul über einen weiteren Bus mit der Einrichtung CF, einer Codec-und Filtereinrichtung, verbunden, die wiederum ausgangsseitig einerseits über eine Lauthöreinrichtung HE, deren Ausgangsamplitude einstellbar ist, mit einem Lautsprecher LH und andererseits über eine Sprechschaltung SS mit einem Handapparat HA verbunden ist, dem ein Zweithörer ZH zugeordnet ist. Ferner ist eine Telefonperipherielogik PL vorhanden, an die über einen einstellbaren Verstärker ein Lautsprecher TR für den Tonruf, eine Zweittonrufeinrichtung ZR, eine Tastatur TS, ein Gabelumschalter und ein Schloßschalter GS, ein Display DP und Zusatzeinrichtungen ZE angeschlossen sind. Die Notstromeinrichtung besteht aus einer Notstromerkennung NE, die mit einem an die Schnittstelle $S_0$ angeschlossenen Gleichspannungsumsetzer GU zusammenarbeitet und die nach dem Erkennen des Ausfalls der eigenen Versorgungsspannung für die Anpassungsschaltungsanordnung die Spannungsversorgung aus der Schnittstelle $S_0$ veranlaßt, sofern ein Notstromberechtigungsschalter NB eingelegt ist. Die Einrichtungen IC, LC, CF, HE, PL und NE sind über ein Rechnerbussystem mit einem Mikrorechner MR gekoppelt, in den eine Subadresse SA über ein Port P eingegeben werden kann und der mit einem batteriebetriebenen RAM-Speicher versehen ist.

Die Anpassungsschaltung IC sorgt für den Abschluß der Schnittstelle $S_O$, führt die 4-Drahtanpassung sowie die Funktionen des Buszugriffs und der Aktivierung und Deaktivierung des Datenübertragungsabschnitts aus, stellt die Taktsynchronisation der Vermittlungsstelle mit dem Endgerät her und erfüllt im übrigen alle diejenigen Funktionen, die in der Ebene 1 des OSI-Verfahrensmodells definiert sind.

Der Übertragungsebenen-Protokollmodul LC nimmt die Multiplexer-und Demultiplexer-Funktionen für die zwei Sprach-oder Datenkanäle (B-Kanäle) und den Signalisierungskanal (D-Kanal) wahr und erfüllt alle diejenigen Funktionen, die in der Ebene 2 des OSI-Verfahrensmodells definiert sind. Er wird durch den Mikrorechner MR gesteuert, kann mit einem 8-oder 16-bit-Prozessor zusammenarbeiten, weist eine Steuereinrichtung für den direkten Speicherzugriff auf und bildet ausgangsseitig eine Codec-Schnittstelle mit einer Übertragungsrate von 2 x 64 kb/s. Die Datenübertragung im D-Kanal erfolgt gemäß einem besonderen Datenübertragungs-und Sicherungsverfahren, dem sogenannten HDLC-Verfahren. Hierfür ist nun eine besondere HDLC-Steuereinrichtung vorgesehen, die mit einem besonderen Protokoll, dem sogenannten LAP-D-Protokoll arbeitet, das dem vom CCITT in der Empfehlung X.25 LAP-B empfohlenen Signalisierungsverfahren ähnelt, das jedoch für Punkt-zu-Mehrpunkt-Verbindungen ausgelegt ist.

Das Netzwerkebenen-Protokollmodul MR übernimmt alle diejenigen Ebene-3-Funktionen, die für sämtliche Teilnehmerendgeräte gleich sind. Diese sind beispielsweise die Steuerung der Ebene 2, die Verwaltung der Basiskanäle (B-Kanäle), die Teilnehmerendgeräteauswahl am Bus und die Auswahl der netzseitigen Verbindungsanforderungen bezüglich des Teilnehmerendgerätedienstes. Es wird dazu das entsprechende Ebene-3-peer-to-peer-Protokoll (s. Fig. 5) bearbeitet, wobei diesem Protokollelemente (Nachrichten, Parameter) entnommen bzw. hinzugefügt werden.

Die jeweilige Anschlußeinheit $A_n$ übernimmt die verbleibenden spezifischen Ebene-3-Funktionen, wie beispielsweise die Steuerung von Teilnehmerselbsteingaben und die Abwicklung von Dienstmerkmalen. Die Basisanschlußeinheit BE stellt dazu das erforderliche Protokoll als Software-Nachrichten an der Schnittstelle p3 bereit. Dieses Protokoll ist gegenüber dem Ebene-3-peer-to-peer-Protokoll dadurch reduziert, daß die Basisanschlußeinheit BE einen Teil der Ebene-3-Funktionen abdeckt. Ferner müssen den Anschlußeinheiten $A_n$ an der Schnittstelle p3 nicht die Peer-to-peer-und die Layer-to-layer-Protokolle der tieferen Ebenen 1 und 2 bekannt sein, da diese von der Basisanschlußeinheit BE abgedeckt werden.

Das Netzwerkebenen-Protokollmodul MR ist durch einen Mikrorechner und durch ein dazugehöriges Softwaremodul realisiert, das mit den Nachbarmoduln IC, LC und $A_n$ über Softwarenachrichten kommuniziert. Die Aufgabe des Netzwerkebenen-Protokollmoduls MR besteht also darin, Signalisierungsnachrichten mittels der dafür vorgesehenen Software mit der Vermittlungsstelle als Teil eines Signalisierungsprotokolls auszutauschen, wobei diese Nachrichten aus dem Protokoll entnommen bzw. eingefügt und in eine für das Endgerät relevante Untermenge des Signalisierungsprotokolls umgesetzt werden.

Der Telefonieteil und die Basisanschlußeinheit laufen auf der gleichen Mikroprozessor-Hardware und unter dem gleichen Betriebssystem. Der Informationsaustausch erfolgt über Software-Messages zwischen den einzelnen Modulen.

Die in Fig. 3 dargestellte Basisanschlußeinheit, dort mit BE bezeichnet, ist wie die der Fig.2 ausgebildet. Sie arbeitet mit einer Anschlußschaltung A2 zum Anschluß von Bildschirmtextmodems, Faksimilegeräten oder Fernkopierern an eine zweiadrige Leitung LG zusammen.

Die Basisanschlußeinheit BE weist wieder eine Anpassungsschaltung IC, einen Übertragungsebenen-Protokollmodul LC und einen Netzebenen-Protokollmodul MR auf. Die Anschlußschaltung IC führt dem Protokollmodul LC und einer Codec-und Filtereinrichtung CO ein Rahmentaktsignal mit einer Frequenz von 8 kHz über die Ader fr zu und leitet dem Protokollmodul ferner über die Ader tt einen weiteren Takt und über den Bus dt Daten zu. Das Protokollmodul LC gibt an die Codec-und Filtereinrichtung CO über die Ader c1 ein Taktsignal der Frequenz von 128 kHz, über die Ader c2 ein Taktsignal der Frequenz 64 kHz und über die Ader b1 Daten des $B_1$-Kanals mit einer Übertragungsrate von 64 kb/s ab. Die Ader b2 ist für den $B_2$-Kanal vorgesehen.

Das Netzwerkebenen-Protokollmodul MR besteht aus einem Mikroprozessor MP (beispielsweise 8088) und vier an diesen angeschlossene Einrichtungen, nämlich einem Speicher SP, einem Zeitglied TI, einer Decodierlogik DL und einer Interruptlogik IL. Die Einrichtungen SP, TI und DL sind zur Steuerung des Protokollmoduls LC über Ader eine ck mit diesem verbunden. Der Protokollmodul LC, der Mikroprozessor MP und ein Parallelinterface PI stehen untereinander mittels eines Rechnerbusses rb in Verbindung. Eine von der Dekodierlogik DL zum Parallelinterface PI führende Ader pk dient zur peripheren Kontrolle. Eine weitere Ader sk dient zur Schnittstellenkontrolle. Das Parallelinterface PI ist mit einer Leitungsschaltung LS über zwei Adern rs, sc verbunden, wobei über die Ader rs die Rufstromsteuerung und über die Ader sc die Schleifenstromüberwachung erfolgt. Bei der Schleifenstromüberwachung ist die Interruptlogik IL über eine Interruptanforderungsader ir ansteuerbar.

Von der Codec-und Filtereinrichtung CO erfolgt der Datenaustausch über einen Adapter AP, die Leitungsschaltung LS und einer Rufstromschaltung AR mit der zweiadrigen Leitung LG, an die die genannten Endgeräte angeschlossen werden können. Die Rufstromschaltung AR nimmt eine Anpassung vor, sorgt für die Rufumschaltung und erhält den Rufwechselstrom über eine Leitung rw von einer Stromversorgungseinrichtung SV, die ein vom Wechselstromnetz UW betriebenes Netzteil zur Versorgung des gesamten, in Fig. 3 gezeigten Geräts ist.

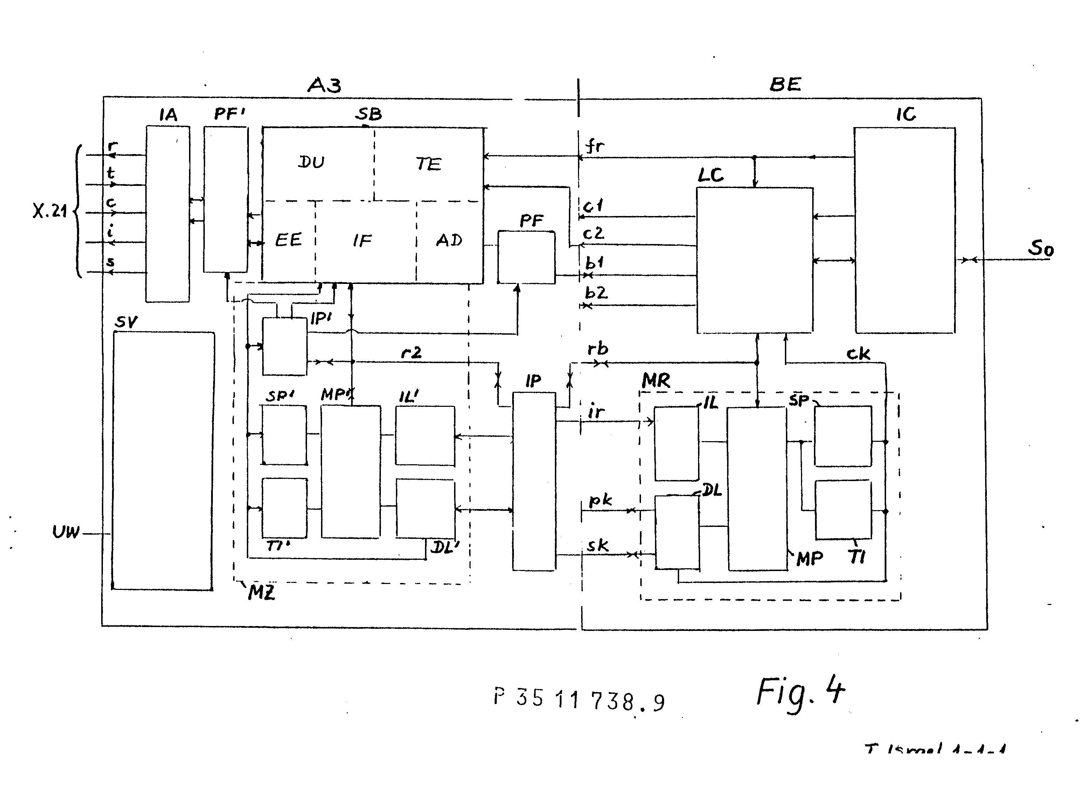

In Fig. 4 ist eine Anpassungsschaltungsanordnung mit einer Schnittstelle X.21 zum Anschluß eines Teletexgeräts dargestellt. Es ist wieder eine Basisanschlußeinheit BE mit demselben Aufbau wie bei den Anpassungsschaltungsanordnungen der Figuren 2 und 3 vorhanden. Die Schnittstelle der Basisanschlußeinheit zeigt dieselben Anschlüsse. Die Anpassungsschaltung A3 hat jedoch einen spezifischen Aufbau.

Die Anpassungsschaltung A3 weist einen zweiten Mikrorechner MZ auf, der mit einem Parallelinterface IP zur Kopplung dieses Mikrorechners mit dem ersten Mikrorechner MR verbunden ist. Der Mikrorechner MZ steht mit einem Steuerbaustein SB in Verbindung, der einerseits an die Einrichtungen IC, LC und eine Prüfschaltungslogik PF angeschlossen ist und andererseits über eine weitere Prüfschaltungslogik PF' und ein Interface IA mit der Ausgänge r, t, c, i und s aufweisenden Schnittstelle X.21 in Verbindung steht. Außerdem ist wieder eine Stromversorgungseinrichtung SV vorhanden, die als Netzteil ausgebildet ist und zur Versorgung der gesamten, in Fig. 4 dargestellten Geräts dient.

Der Mikrorechner MZ besteht ähnlich wie der Mikrorechner MR aus einem Mikroprozessor MP' - (beispielsweise 8088) und fünf an diesen angeschlossene Einrichtungen, nämlich einem Speicher SP', einem Zeitglied TI', einer Decodierlogik DL', einer Interruptlogik IL' und einem Parallelinterface IP'.

Der Steuerbaustein SB umfaßt eine Einrichting DU zur Diensteumschaltung, eine Einrichtung TE zur Takterzeugung und Synchronisierung, eine Einrichtung EE zur Hardware-Unterstützung für eine End-zu-End-Synchronisation, ein zweifach serielles Interface IF und einen Adapter AD zur Adaption an verschiedene Datenübertragungsgeschwindigkeiten im Bereich von 8 bis 64 kb/s.

Die Decodierlogik DL' steuert die Einrichtungen TI', SP', IP' und IF. Das Interface IF wird von dem Mikroprozessor MP'und von dem Parallelinterface IP' beeinflußt, das auch auf die Prüfschaltungslogik PF' und die Prüfschaltungslogik PF einwirkt. Das Parallelinterface IP' arbeitet über einen weiteren Rechnerbus r2 ferner mit dem Parallinterface IP zusammen.

Der weitere Aufbau der in den Figuren 3 und 4 dargestellten Anpassungsschaltungen A2 und A3 soll hier nicht erörtert werden. Es hat nur gezeigt werden sollen, daß mit derselben Basisanschlußeinheit BE alle verschiedenen Endgeräte betreibbar sind. Die Basisanschlußeinheit BE ist dabei in mehrere, gemeinsame Funktionen der Endgeräte zusammenfassende Module IC, LC und MR aufgeteilt, die sich als großintegrierte Schaltungen und als Softwaremoduln leicht realisieren lassen. Die Anschlußschaltung IC kann vorzugsweise auch derart ausgebildet sein, daß sie mit einer Schnittstelle $U_{ko}$ (Fig. 1) zusammenarbeitet, so daß die Basisanschlußeinheit BE universell einsetzbar ist.

**Ansprüche**

1. Schaltungsanordnung zur Anpassung von Teilnehmerendgeräten an eine $S_0$-Schnittstelle in ISDN-Fernmeldeanlagen mittels mindestens eines Basisanschlußteils, das eine mit der Teilnehmerleitung verbundene Anschlußschaltung und einen nachgeschalteten Multiplexer/Demultiplexer aufweist, der für alle Endgeräte ein und dieselbe Schnittstelle aufweist und über eine Anpassungsschaltung an das Endgerät angeschlossen ist, wobei die genannten Schaltungsteile mit einer Steuereinheit verbunden sind, dadurch gekennzeichnet, daß für jedes Teilnehmerendgeräte (TD, BF, TX, FX) eine Basisanschlußeinheit (BE) gleichen Aufbaus verwendet wird die folgende Module aufweist:

a) eine Anschlußschaltung (IC), die die Funktionen des Buszugriffs und der Aktivierung und Deaktivierung ausführt, die die Taktsynchronisation der Vermittlungsstelle mit dem Endgerät herstellt und die alle diejenigen Funktionen erfüllt, die in der Ebene 1 des OSI-Verfahrensmodells definiert sind,

b) ein mit der Anschlußschaltung (IC) verbundenes Übertragungsebenen-Protokollmodul - (LC), das Multiplexer-und Demultiplexer-Funktionen für zwei Sprach-oder Datenkanäle und einen Signalisierungskanal erfüllt und das alle diejenigen Funktionen erfüllt, die in der Ebene 2 des OSI-Verfahrensmodells definiert sind,

c) ein mit dem Übertragungsebenen-Protokollmodul (LC) verbundenes Netzwerkebenen-Protokollmodul (MR), das mindestens einen Mikrorechner enthält und alle diejenigen Funktionen erfüllt, die in der Ebene 3 des OSI-Verfahrensmodells definiert sind und die für sämtliche Teilnehmerendgeräte gleich sind.

2. Schaltungsanordnung nach Anspruch 1, dadurch gekennzeichnet, daß die Anschlußschaltung (IC) derart ausgebildet ist, daß sie mit einer Zweidrahtleitung ($U_{kO}$-Schnittstelle) zusammenarbeitet.

Teilnehmerbereich     Anschlußbereich     Vermittlungsbereich

Fig. 1

P 35 11 738.9

0 197 479

Fig. 2

P 35 11 738.9

T. Israel 1-1-1

0 197 479

Fig. 3

P 35 11 738.9

0 197 479

Fig. 4

P 35 11 738.9

0 197 479

Fig. 5

Teilnehmerendgerät    So-Schnittstelle

An

BE

p3

Ebene 3

Ebene 2

Ebene 1

Ebene-3-peer-to-peer-Protokoll

Ebene-2-peer-to-peer-Protokoll

Ebene-1-peer-to-peer-Protokoll

Ebene 3    Layer-to

Layer-Protokoll

Ebene 2

Ebene 1

0 197 479

P 35 11 738.9

T. Israel 1-1-1